(19) Europäisches Patentamt
European Patent Office
Office européen des brevets

(11) **EP 4 141 301 A2**

(12) **EUROPEAN PATENT APPLICATION**

(43) Date of publication:
**01.03.2023   Bulletin 2023/09**

(21) Application number: **22191852.7**

(22) Date of filing: **24.08.2022**

(51) International Patent Classification (IPC):
**F16K 31/04** (2006.01)    **F25B 41/31** (2021.01)
**F25B 41/35** (2021.01)    **H02P 8/22** (2006.01)

(52) Cooperative Patent Classification (CPC):
**F25B 41/35; F16K 31/04; H02P 8/22;**
F25B 2341/06; F25B 2600/2513

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:   **24.08.2021   JP 2021136019**

(71) Applicant: **TGK CO., Ltd.
Tokyo 193-0942 (JP)**

(72) Inventors:
• **YUASA, Tomohiro**
  **Tokyo, 193-0942 (JP)**
• **SAEKI, Shinji**
  **Tokyo, 193-0942 (JP)**
• **KANEKO, Yasuaki**
  **Tokyo, 193-0942 (JP)**
• **MIZUSHIMA, Yorinao**
  **Tokyo, 193-0942 (JP)**

(74) Representative: **Schröer, Gernot H.
Meissner Bolte Patentanwälte
Rechtsanwälte Partnerschaft mbB
Bankgasse 3
90402 Nürnberg (DE)**

(54) **MOTOR OPERATED VALVE CONTROL DEVICE, ADJUSTMENT DEVICE, MOTOR OPERATED VALVE CONTROL PROGRAM, AND ADJUSTMENT PROGRAM**

(57)   A motor operated valve control device (200) controls a motor operated valve (1) including a stepping motor (3) for rotating a rotor (60) by a driving current applied in accordance with an excitation pattern associated with a step, and a mechanism (109) for changing a valve opening degree by rotational movement of the rotor (60). The motor operated valve control device (200) includes an offset value storage unit 222 that stores a step number offset value set for each individual motor operated valve (1), a reception unit (210) that receives a step movement command, a rotation controlling unit (218) that corrects a step number, which is sequentially switched on the basis of the step movement command, on the basis of the step number offset value, and identifies an excitation pattern associated with the corrected step number, and a rotation instructing unit (214) that applies a driving current to the stepping motor (3) in accordance with the identified excitation pattern.

FIG. 16

PROCESSING PERFORMED BY MOTOR OPERATED VALVE CONTROL DEVICE

S30  IS MOVEMENT COMMAND RECEIVED?
S32  DETERMINE ROTATING DIRECTION AND ROTATING SPEED
S34  IS STEP TO BE ADVANCED?
S36  IDENTIFY STEP NUMBER
S38  CORRECT STEP NUMBER
S40  IDENTIFY EXCITATION PATTERN
S42  TURN ON/CHANGE DRIVING CURRENTS
S44  HAS STEP REACHED DESTINATION?
S46  TURN OFF DRIVING CURRENTS

EP 4 141 301 A2

**Description**

The present invention relates to a motor operated valve and, in particular, to a method for controlling a stepping motor.

An automotive air conditioner typically includes a compressor, a condenser, an expander, an evaporator, and so forth arranged in a refrigeration cycle. In refrigeration cycles, various control valves for controlling the flow of fluid, such as expansion valves serving as expanders, are used. With recent increase of electric vehicles, motor operated valves including stepping motors as driving units have been increasingly widely employed.

As an example of such motor operated valves, a motor operated valve including a magnetic sensor for detecting a valve opening degree is known (refer to JP 2018-135908 A, for example). A valve element is formed at one end of an actuating rod that rotates with a rotor, and a magnet (sensor magnet) is provided on the other end thereof. A magnetic sensor is arranged do axially face the sensor magnet. The rotational movement of the rotor is converted into the axial movement of the valve element by a feed screw mechanism. A change of magnetic flux with the rotation of the rotor is sensed by the magnetic sensor, which enables detection of the rotation angle of the sensor magnet and thus the position of the valve element in the axial direction, and calculation of the valve opening degree.

A reference position, which is a reference for control, is set for the valve element that moves up and down in the motor operated valve. When the rotor continues rotating in the valve closing direction and reaches the reference position, which is also called an "origin", the rotation of the rotor is stopped by a stopper (refer to JP 2020-204344 A, for example). In addition, as described in JP 2017-106686 A and JP 2003-113948 A, motor operated valves in which the valve opening degree is changed by rotation of a valve element have also been known.

Related Art List

    (1) JP 2018-135908 A
    (2) JP 2020-204344 A
    (3) JP 2017-106686 A
    (4) JP 2003-113948 A

An external device connected with a motor operated valve control device that controls a motor operated valve controls the valve opening degree by using step numbers relative to the origin. For example, for adjusting a rotor to a valve opening point, the external device transmits a step movement command including a step number corresponding to the valve opening point to the motor operated valve control device. The motor operated valve control device rotates the rotor by sequentially switching the step to the step number.

There are, however, individual mechanical differences among actual motor operated valves. Even when rotors are rotated to the same step number, the valve opening degree differs from one motor operated valve to another. As the valve opening degrees vary, the flow rates of refrigerant passing through individual motor operated valves also vary. In other words, the flow characteristics of the motor operated valves are not uniform. Such a flow rate error hinders achievement of an ideal refrigeration cycle.

A flow rate error is caused by a difference between an ideal valve opening degree expected with use of a step number indicated by an external device and an actual valve opening degree when the step number is used. From a different point of view focusing on the valve opening degree, the step number with which an actual valve opening degree is obtained is deviated from an ideal step number with which the opening degree is expected to be obtained. The problem can therefore be deemed to lie in step error.

A chief object of the present invention is to provide a technology for controlling a stepping motor so that a step error in each individual motor operated valve is reduced.

A motor operated valve control device according to an embodiment of the present invention is a motor operated valve control device that controls a motor operated valve including a stepping motor for rotating a rotor by a driving current applied in accordance with an excitation pattern associated with a step, and a mechanism for changing a valve opening degree by rotational movement of the rotor, and includes: an offset value storage unit that stores a step number offset value set for each individual motor operated valve; a reception unit that receives a step movement command; a rotation controlling unit that corrects a step number on the basis of the step number offset value, and identifies an excitation pattern associated with the corrected step number, the step number being sequentially switched on the basis of the step movement command; and a rotation instructing unit that applies the driving current to the stepping motor in accordance with the identified excitation pattern.

An adjustment device according to an embodiment of the present invention is an adjustment device connected with a motor operated valve control device that controls a motor operated valve including a stepping motor for rotating a rotor by a driving current applied in accordance with an excitation pattern associated with a step, and a mechanism for changing a valve opening degree by rotational movement of the rotor, and including: an offset value calculating unit that calculates a step error by dividing a flow rate error by an amount of change in a flow rate per step in the motor operated valve, and identifies a step number offset value on the basis of the step error, the flow rate error being a difference between an actual flow rate and an ideal flow rate of the motor operated valve at a predetermined step; and an offset value setting unit that sets the identified step number offset value in the motor operated valve control device.

An adjustment device according to an embodiment of the present invention is an adjustment device connected with a motor operated valve control device that controls a motor operated valve including a stepping motor for rotating a rotor by a driving current applied in accordance with an excitation pattern associated with a step, and a mechanism for changing a valve opening degree by rotational movement of the rotor, and including: an offset value calculating unit that calculates a difference between a step number at an actual valve opening point and a step number at an ideal valve opening point of the motor operated valve, and identifies a step number offset value on the basis of the difference between the step numbers; and an offset value setting unit that sets the identified step number offset value in the motor operated valve control device.

A motor operated valve control program according to an embodiment of the present invention causes a computer that controls a motor operated valve including a stepping motor for rotating a rotor by a driving current applied in accordance with an excitation pattern associated with a step, and a mechanism for changing a valve opening degree by rotational movement of the rotor to implement: a function of storing a step number offset value set for each individual motor operated valve; a function of receiving a step movement command; a function of correcting a step number on the basis of the step number offset value, and identifying the excitation pattern associated with the corrected step number, the step number being sequentially switched on the basis of the step movement command; and a function of applying the driving current to the stepping motor in accordance with the identified excitation pattern.

An adjustment program according to an embodiment of the present invention causes a computer connectable to a motor operated valve control device that controls a motor operated valve including a stepping motor for rotating a rotor by a driving current applied in accordance with an excitation pattern associated with a step, and a mechanism for changing a valve opening degree by rotational movement of the rotor to implement: a function of calculating a step error by dividing a flow rate error by an amount of change in a flow rate per step in the motor operated valve, and identifying a step number offset value on the basis of the step error, the flow rate error being a difference between an actual flow rate and an ideal flow rate of the motor operated valve at a predetermined step; and a function of setting the identified step number offset value in the motor operated valve control device.

An adjustment program according to an embodiment of the present invention causes a computer connectable to a motor operated valve control device that controls a motor operated valve including a stepping motor for rotating a rotor by a driving current applied in accordance with an excitation pattern associated with a step, and a mechanism for changing a valve opening degree by rotational movement of the rotor to implement: a function of calculating a difference between a step number at an actual valve opening point and a step number at an ideal valve opening point of the motor operated valve, and identifying a step number offset value on the basis of the difference between the step numbers; and a function of setting the identified step number offset value in the motor operated valve control device.

FIG. 1 is a cross-sectional view of a motor operated valve according to an embodiment;
FIGS. 2A and 2B illustrate the structures of a stator and around the stator;
FIGS 3A to 3D illustrate the structure of a rotor;
FIG. 4 is a schematic view illustrating the relation of a magnetic sensor, a sensor magnet, and lines of magnetic force produced by the sensor magnet;
FIG. 5 is a plan view of the sensor magnet;
FIG. 6 is a graph illustrating the relation between a sensor value and a sensed angle of the sensor magnet;
FIG. 7 is a graph illustrating the relation between an angle value (duty cycle) and a step;
FIG. 8 is a schematic diagram of a range of movement of the rotor;
FIG. 9 is a graph illustrating ideal flow characteristics;
FIG. 10 is a graph illustrating actual flow characteristics;
FIG. 11A is a schematic view illustrating a state at an origin; FIG. 11B is a schematic view illustrating a state at a valve opening point; FIG. 11C is a schematic view illustrating a valve open state;
FIG. 12 is a graph illustrating an overview of an error at an actual measurement point;
FIG. 13 is a graph illustrating an overview of an offset value;
FIG. 14 is a functional block diagram of an adjustment device and a motor operated valve control device;
FIG. 15 is a sequence diagram illustrating processing of an adjustment process; and
FIG. 16 is a flowchart illustrating processing performed by the motor operated valve control device.

An embodiment of the invention will now be described. The description is not intended to limit the scope of the present invention, but to exemplify the invention.

[Embodiment]

The embodiment of the present invention will be described in detail below with reference to the drawings. In the description below, for convenience of description, the positional relationship in each structure may be expressed with reference to how the structure is depicted in the drawings. In the following embodiment and modifications thereof, components that are substantially the same will be designated by the same reference numerals and redundant description thereof may be omitted as appropriate.

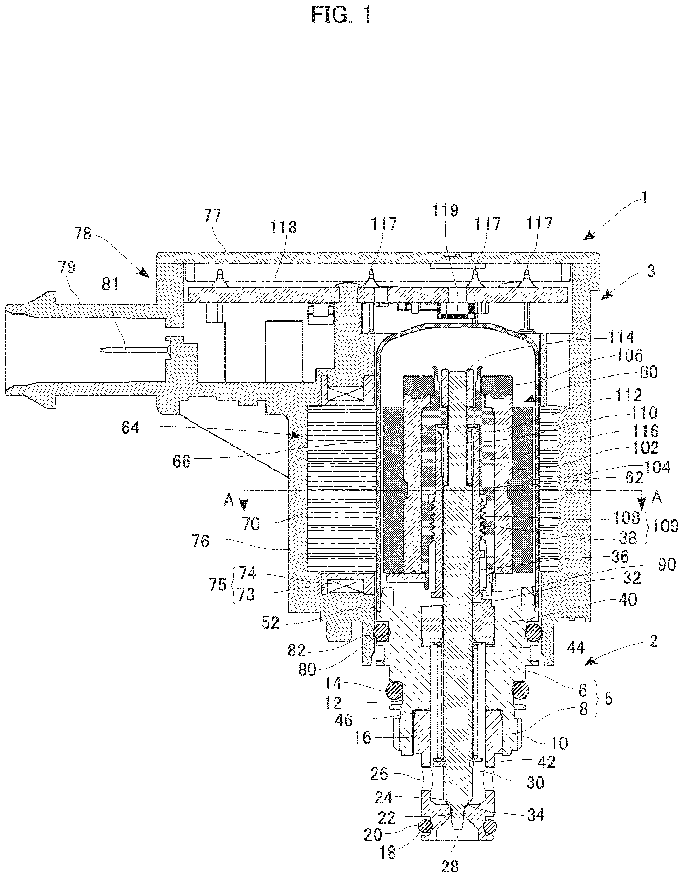

FIG. 1 is a cross-sectional view of a motor operated valve according to the embodiment.

The motor operated valve 1 is applied to a refrigeration cycle of an automotive air conditioner, which is not illustrated. The refrigeration cycle includes a compressor for compressing a circulating refrigerant, a condenser for condensing the compressed refrigerant, an expansion valve for throttling and expanding the condensed refrigerant and delivering the resulting spray of refrigerant, and an evaporator for evaporating the spray of refrigerant to cool the air in a vehicle interior using the evaporative latent heat. The motor operated valve 1 functions as the expansion valve in the refrigeration cycle.

The motor operated valve 1 is constituted by an assembly of a valve unit 2 and a motor unit 3. The valve unit 2 includes a body 5 containing a valve section. The body 5 functions as a "valve body". The body 5 includes a first body 6 and a second body 8, which are coaxially mounted. The first body 6 and the second body 8 are both made of stainless steel (hereinafter referred to as "SUS"). The second body 8 has a valve seat 24, and a material excellent in abrasion resistance is therefore selected for the second body 8. The first body 6 is more weldable than the second body 8, and the second body 8 is more workable than the first body 6.

The first body 6 has a stepped cylindrical shape with an outer diameter decreasing in the downward direction. An upper end portion of the first body 6 is slightly reduced in outer diameter, which forms a step serving as a stopper portion 52. An external thread 10 for mounting the motor operated valve 1 on a piping body, which is not illustrated, is formed on an outer face of a lower portion of the first body 6. A pipe extending from the condenser side, a pipe connected with the evaporator, and the like are connected with the piping body, details of which will not be described herein. A seal accommodating portion 12, which is an annular groove, is formed on an outer face of the first body 6 at a position a little above the external thread 10, and a seal ring 14 (O-ring) is fitted in the seal accommodating portion 12.

A recessed fitting portion 16 having a circular hole shape is formed in a lower part of the first body 6. The second body 8 has a bottomed cylindrical shape. An upper part of the second body 8 is press-fitted in the recessed fitting portion 16. A seal accommodating portion 18, which is an annular groove, is formed on an outer face of a lower portion of the second body 8, and a seal ring 20 is fitted therein. A valve hole 22 is formed to axially pass through the bottom of the second body 8, and the valve seat 24 is formed at an upper end opening portion of the valve hole 22. An inlet port 26 is formed at a lateral side of the second body 8, and an outlet port 28 is formed at the lower portion thereof. A valve chamber 30 is formed inside the first body 6 and the second body 8. The inlet port 26 and the outlet port 28 communicate with each other via the valve chamber 30.

An actuating rod 32 extending from a rotor 60 of the motor unit 3 is inserted in the body 5. The actuating rod 32 passes through the valve chamber 30. The actuating rod 32 is produced by cutting a rod material made of non-magnetic metal. A needle-like valve element 34 is formed integrally with a lower portion of the actuating rod 32. The valve element 34 touches and leaves the valve seat 24 from the valve chamber 30 side to close and open the valve section.

A guiding member 36 is provided vertically at the center of an upper part of the first body 6. The guiding member 36 is produced by cutting a tubular material made of non-magnetic metal into a stepped cylindrical shape. An external thread 38 is formed on an outer face of a middle portion in the axial direction of the guiding member 36. A lower end portion of the guiding member 36 is enlarged in diameter, and this diameter-enlarged portion 40 is press-fitted in and fixed coaxially to the middle of the upper part of the first body 6. The guiding member 36 slidably supports the actuating rod 32 along the axial direction by an inner face thereof, and rotatably and slidably support a rotating shaft 62 of the rotor 60 by an outer face thereof.

A spring support 42 is provided on the actuating rod 32 at a position slightly above the valve element 34, and another spring support 44 is provided on a bottom portion of the guiding member 36. A spring 46 (which functions as a "biasing member") that urges the valve element 34 in a valve closing direction is provided between the spring supports 42 and 44.

The motor unit 3 is a three-phase stepping motor including the rotor 60 and a stator 64. The motor unit 3 includes a can 66 having a bottomed cylindrical shape. The rotor 60 is located inside the can 66, and the stator 64 is located outside the can 66. The can 66 is a bottomed-cylindrical member covering a space in which the valve element 34 and a mechanism for driving the valve element 34 are disposed and containing the rotor 60, and defines an internal pressure acting space (internal space) in which the pressure of the refrigerant acts and an external non pressure acting space (external space) in which the pressure of the refrigerant does not act.

The can 66 is made of non-magnetic metal (which is SUS in the present embodiment), and coaxially mounted on the first body 6 in such a manner that a lower portion thereof is mounted (outserted) around an upper end opening of the first body 6. A lower end of the can 66 is stopped by the stopper portion 52, by which the length by which the can 66 overlap with the first body 6 is limited. The boundary between the lower end of the can 66 and the first body 6 is fully welded, which is not illustrated, so that the body 5 and the can 66 are fixed to each other and sealing therebetween is achieved. A space surrounded by the body 5 and the can 66 corresponds to the aforementioned pressure acting space.

The stator 64 includes a laminated core 70, and a plurality of salient poles arranged at regular intervals on the inner side of the laminated core 70. The laminated core 70 is constituted by annular cores that are axially stacked. A bobbin 74 on which a coil 73 (electromagnetic coil) is wound is mounted on each salient pole. The coil 73 and the bobbin 74 constitute a "coil unit 75". In the present embodiment, three coil units 75 to supply three-phase currents are arranged at every 120 degrees with respect to the central axis of the laminated core 70 (details of which will be described later).

The stator 64 is integrated with a case 76 of the motor unit 3. Specifically, the case 76 is formed by injection molding (also called "insert molding" or "molding") of a corrosion-resistant resin (plastic). The stator 64 is coated with molding resin by the injection molding. The case 76 is made of the molding resin. Hereinafter, the molded stator 64 and case 76 will also be referred to as a "stator unit 78".

The stator unit 78 has a hollow structure in which the can 66 is coaxially inserted, and is mounted on the body 5. A seal accommodating portion 80, which is an annular groove, is formed on an outer face of the first body 6 at a position slightly lower than the stopper portion 52, and a seal ring 82 (O-ring) is fitted in the seal accommodating portion 80. The seal ring 82 between the outer face of the upper part of first body 6 and an inner face of lower part of the case 76 prevents an external atmosphere (such as water) from entering a gap between the can 66 and the stator 64.

The rotor 60 includes a cylindrical rotor core 102 mounted on the rotating shaft 62, a rotor magnet 104 provided along an outer face of the rotor core 102, and a sensor magnet 106 provided on an upper end face of the rotor core 102. The rotor core 102 is mounted on the rotating shaft 62. The rotor magnet 104 is magnetized with a plurality of poles in the circumferential direction. The sensor magnet 106 is also magnetized with a plurality of poles. The rotor magnet 104 and the sensor magnet 106 are produced by magnetization of a magnet part formed integrally with the rotor core 102, details of which will be described later.

The rotating shaft 62 is a bottomed cylindrical shaft mounted (outserted) around the guiding member 36 and having an open end facing downward. An internal thread 108 formed on the inner face of a lower portion of the rotating shaft 62 engages with the external thread 38 of the guiding member 36. These threads constitute a feed screw mechanism 109 that converts the rotational movement of the rotor 60 into the axial movement of the actuating rod 32. This moves the valve element 34 upward and downward in the axial direction, that is, in the opening and closing directions of the valve section.

An upper portion of the actuating rod 32 is reduced in diameter, and this reduced-diameter portion 110 extends through a bottom 112 of the rotating shaft 62. An annular stopper 114 is fixed to the leading end of the reduced-diameter portion 110. A spring 116 for biasing the actuating rod 32 downward (that is, in the valve closing direction) is provided between a base end of the reduced-diameter portion 110 and the bottom 112. In this structure, while the valve is being opened, the actuating rod 32 is moved integrally with the rotor 60, with the stopper 114 being stopped by the bottom 112. In contrast, while the valve is being closed, the spring 116 is compressed by reaction force that the valve element 34 receives from the valve seat 24. In this process, the elastic reaction force of the spring 116 presses the valve element 34 against the valve seat 24, which increases the seating performance (valve closing performance) of the valve element 34.

The motor unit 3 includes a circuit board 118 on the outer side of the can 66. The circuit board 118 is fixed inside the case 76. In the present embodiment, various circuits that function as a control unit, a communication unit, and the like are mounted on the lower face of the circuit board 118. Specifically, a drive circuit for driving the motor, a control circuit (microcomputer) for outputting control signals to the drive circuit, a communication circuit for the control circuit to communicate with an external device or an adjustment device, a power supply circuit for supplying power to the circuits and the motor (coil), etc. The upper end of the case 76 is closed by a cap member 77. The circuit board 118 is located in a space in the case 76, below the cap member 77.

A magnetic sensor 119 is provided on a face of the circuit board 118 facing the sensor magnet 106. The magnetic sensor 119 faces the sensor magnet 106 in the axial direction via a bottom end wall of the can 66. The magnetic flux of the sensor magnet 106 changes with the rotation of the rotor 60. The magnetic sensor 119 detects the movement amount of the rotor 60 (the rotation angle of the rotor 60 in the present embodiment) by sensing the change of the magnetic flux. The control unit calculates the position of the valve element 34 and thus the valve opening degree on the basis of the movement amount of the rotor 60.

A pair of terminals 117 connected with the coil 73 extends from each of the bobbins 74 and is connected with the circuit board 118. A power supply terminal, a ground terminal, and a communication terminal (which are also collectively referred to as "connection terminals 81") extend from the circuit board 118, and are drawn through a side wall of the case 76 to the outside. A connector part 79 is formed integrally with the side of the case 76, and the connection terminals 81 are located inside the connector part 79.

A stopper 90 is formed below the rotor 60. As described in JP 2020-204344 A, the structure of the stopper 90 is known. When the actuating rod 32 reaches a valve closed position, the elastic reaction force of the spring 116 acts on the rotor 60, which stably maintains the valve closure. The stopper 90 ultimately comes into contact with a projection (stopping portion), which is not illustrated, formed as part of the guiding member 36, and the rotation of the rotor 60 in the valve closing direction is thus completely stopped. Hereinafter, a step at which the stopper 90 comes into contact with the projection will be referred to as the "origin" of the step. In addition, in the present embodiment, assume that the valve element 34 is at a "reference position" at the origin of the step.

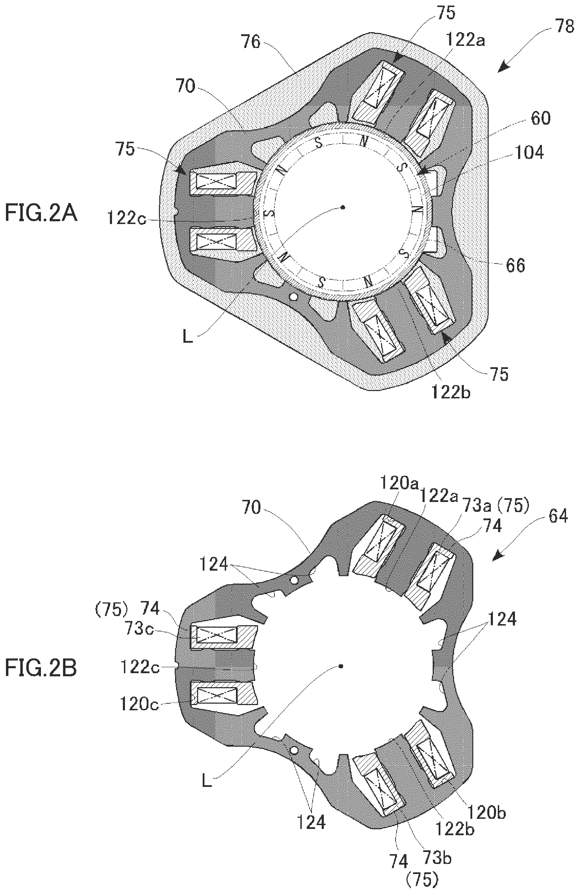

FIGS. 2A and 2B illustrate the structures of the stator 64 and around the stator 64. FIG. 2A is a cross-sectional view of the stator unit 78 taken along arrows A-A in FIG. 1. FIG. 2B illustrates the stator 64 alone (in a state before resin molding). Note that the can 66 and the rotor 60 are illustrated in FIG. 2A for reference (see two-dot chain line).

Because the motor unit 3 is a three-phase motor, the coil units 75 are provided at regular intervals around the axis L of the rotor 60 as illustrated in FIG. 2A. As also illustrated in FIG. 2B, slots 120a to 120c (collectively referred to as "slots 120" when the slots need not be distinguished from each other) are formed at intervals of 120 degrees with respect to the axis L in the inner side of the laminated core 70. Salient poles 122a to 122c (collectively referred to as "salient poles 122") protruding radially inward from the centers of the respective slots 120 are formed, and a U-phase coil 73a, a V-phase coil 73b, and a W-phase coil 73c (collectively referred to as "coils 73") are mounted on the salient poles 122a to 122c, respectively. Slits 124 each having a U-shaped cross section are formed between adjacent slots 120 to optimize magnetic paths.

The rotor magnet 104 faces the salient poles 122a to 122c with the can 66 therebetween. While the magnet 104 is magnetized with ten poles as illustrated in FIG. 2A in the present embodiment, the number of poles may be set as appropriate.

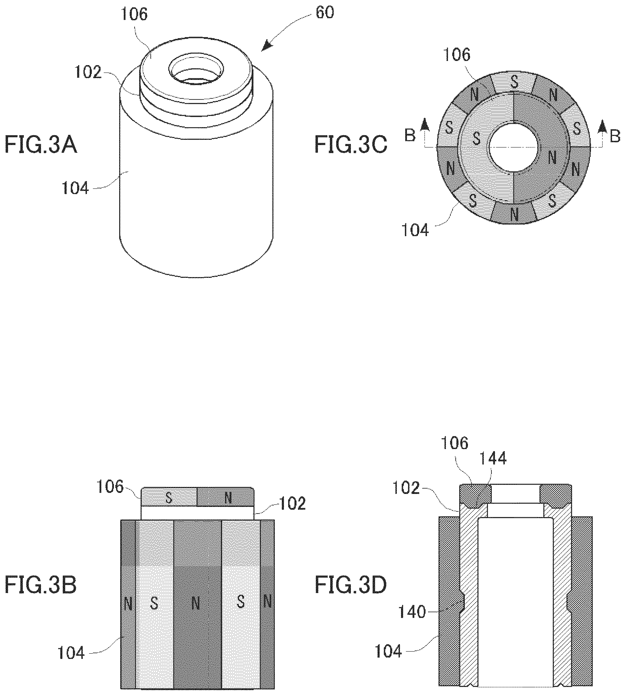

Next, the structures of the magnets of the rotor 60 will be described in detail. FIGS. 3A to 3D illustrate the structure of the rotor 60. FIG. 3A is a perspective view, FIG. 3B is a front view, FIG. 3C is a plan view, and FIG. 3D is a cross-sectional view taken along arrows B-B in FIG. 3C. In FIGS. 3B and 3C, "N" represents a north pole, and "S" represents a south pole. In FIGS. 3A to 3D, for convenience of explanation, the rotating shaft 62 (see FIG. 1) is not illustrated.

The rotor 60 includes the rotor magnet 104 along the outer face of the rotor core 102, and the sensor magnet 106 at an axial end of the rotor core 102 (FIGS. 3A and 3D). The rotor magnet 104 has a cylindrical shape, and is magnetized with ten poles along an outer circumferential face (FIGS. 3B and 3C). In contrast, the sensor magnet 106 has an annular shape, and is magnetized with two poles on a flat face.

As illustrated in FIG. 3D, an inner face of the rotor magnet 104 is fitted to an annular groove 140, and a lower face of the sensor magnet 106 is fitted to an annular groove 144. Thus, the annular groove 140 functions as an anti-falling structure for preventing the rotor magnet 104 from dropping from the rotor core 102. Similarly, the annular groove 144 functions as an anti-falling structure for preventing the sensor magnet 106 from dropping from the rotor core 102.

Next, a method for detecting the rotation angle of the rotor 60 by the magnetic sensor 119 on the basis of the structures described above will be explained. In the following description, the up-down direction in FIG. 1 will be referred to as the "opening and closing direction" or "upward and downward".

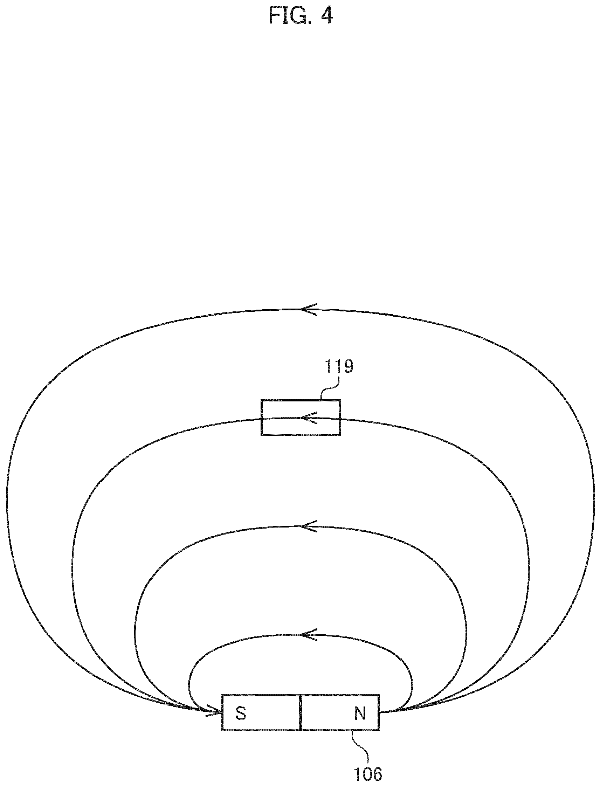

FIG. 4 is a schematic view illustrating the relation of the magnetic sensor 119, the sensor magnet 106, and the lines of magnetic force produced by the sensor magnet 106.
FIG. 4 is a schematic view of the magnetic sensor 119 and the sensor magnet 106 as viewed from the side. As illustrated in FIG. 4, the lines of magnetic force are produced from the north pole (N) to the south pole (S) of the sensor magnet 106 (permanent magnet). The magnetic sensor 119 located right above the sensor magnet 106 is a rotary sensor having a known configuration for detecting the lines of magnetic force produced by the sensor magnet 106. The magnetic sensor 119 detects the rotation angle of the sensor magnet 106 (rotor 60) on the basis of the directions of the lines of magnetic force (details of which will be described later). Note that, in the present embodiment, description will be made on the assumption that the magnetic sensor 119 can detect the rotation angle of the sensor magnet 106, but that the magnetic sensor 119 cannot directly detect the distance to the sensor magnet 106, that is, in other words, the amount of movement of the actuating rod 32 in the opening and closing direction.

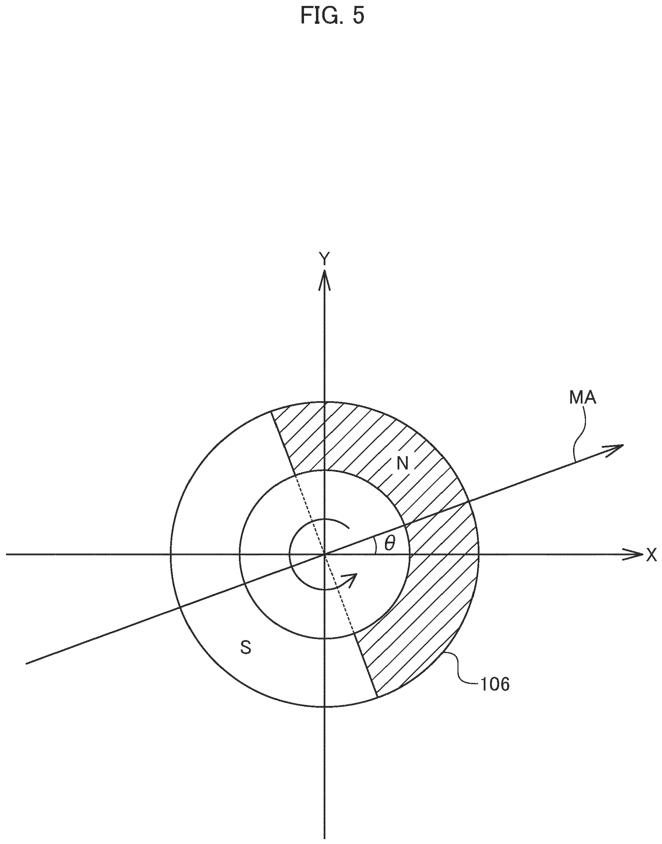

FIG. 5 is a plan view of the sensor magnet 106.
A driving current is caused to flow in the coils 73 of the stator 64 by a method described later, which applies rotational driving force to the rotor 60. When the rotor 60 is rotated in the valve closing direction (downward) (hereinafter referred to as "downward rotation"), the actuating rod 32 (valve element 34) moves in conjunction with the rotor 60 in the valve closing direction, that is, downward in FIG. 1. When the rotor 60 is rotated in the valve opening direction (hereinafter referred to as "upward rotation"), the actuating rod 32 (valve element 34) moves in conjunction with the rotor 60 in the valve opening direction, that is, upward in FIG. 1.

The sensor magnet 106 also rotates in conjunction with the rotation of the rotor 60. With the rotation of the sensor magnet 106, the magnetic field direction MA of the sensor magnet 106 also changes. The angle between the magnetic field direction MA and the X axis when an XY coordinate system (corresponding to a horizontal plane in FIG. 1) is set as illustrated in FIG. 5 is represented by $\theta$. The magnetic sensor 119 detects the rotation angle $\theta$ of the sensor magnet 106 by a known method for the angle sensor described in JP 2018-135908 A.

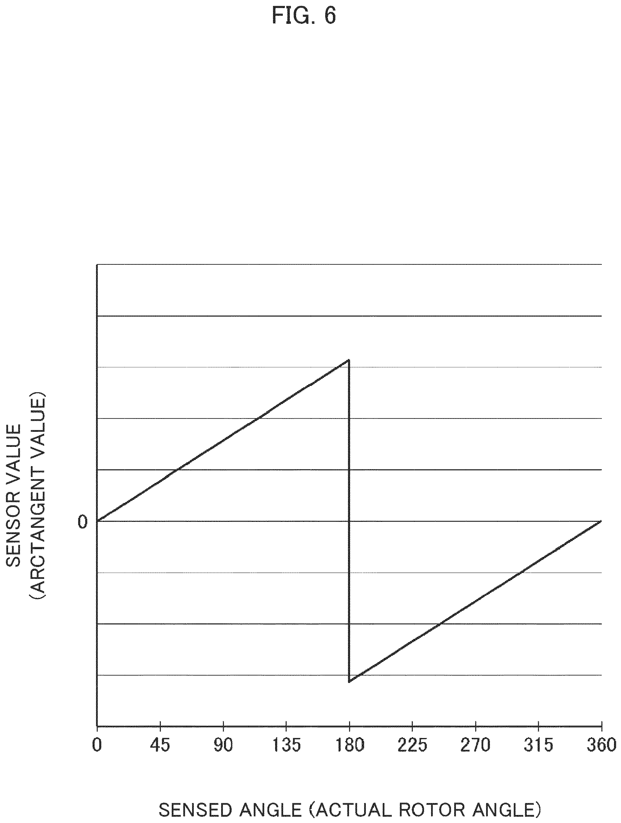

FIG. 6 is a graph illustrating the relation between a sensor value and a sensed angle of the sensor magnet 106. The horizontal axis represents a rotation angle $\theta$ (hereinafter may also be referred to as a "sensed angle") of the sensor magnet 106 measured by the magnetic sensor 119. The vertical axis represents a sensor value of the magnetic sensor 119. The sensor value in this example is an arctangent value. As shown in FIG. 6, the magnetic sensor 119 detects a sensor value in a saw-tooth like waveform in association with the sensed angle. The magnetic sensor 119 replaces the sensor value, which is an analog signal, with a duty cycle of pulses by pulse width modulation (PWM), and outputs a current being a modulated digital signal. In this process, the sensor value is normalized in a range of "a lower limit DA to an upper limit TA", to set the duty cycle of pulses. The lower limit DA and the upper limit TA can be freely set. The lower limit DA may be 0. Hereinafter, the duty cycle of pulses may also be referred to as an "angle value". The control circuit can identify an actual rotor angle (sensed angle) on the basis of the duty cycle (angle value) read from the pulses of the digital signal in accordance with the specification of the magnetic sensor 119.

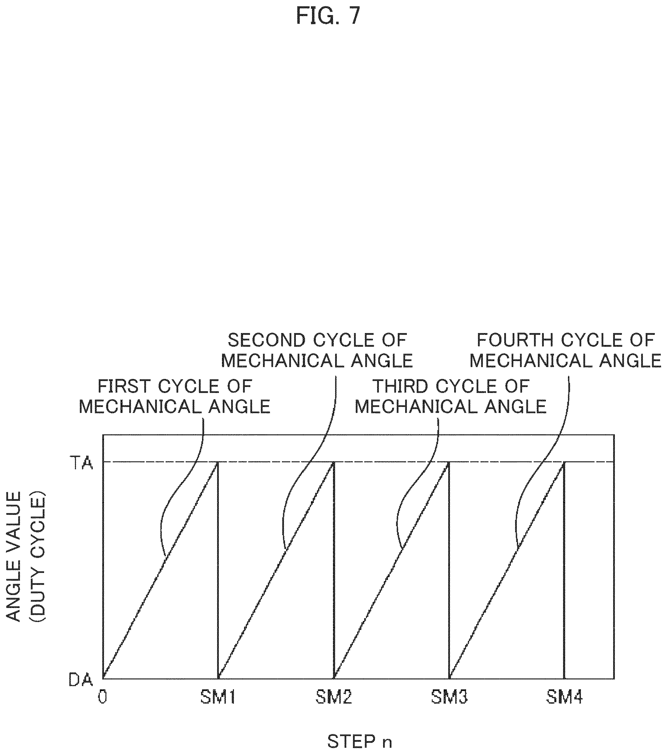

FIG. 7 is a graph illustrating the relation between the angle value (duty cycle) and the step.
In the present embodiment, while the valve element 34 is moved from an uppermost point to a lowermost point, the rotor 60 makes a total of four rotations. Although details will be described later, the control circuit rotates the rotor 60 by changing the driving current supplied to the three-phase coils 73 and thus changing the magnetic field direction of the individual coils 73. In the present embodiment, the control circuit rotates the rotor 60 in units of u1 degrees (details of which will be described later). Hereinafter, this unit rotation amount will be referred to as a "step". According to (360 degrees) $\times$ (4 rotations) / (u1 degrees) = 1440/u1 = SM4, the control circuit instructs the rotor 60 to make rotations corresponding to a total of SM4 steps within the operation range of the actuating rod 32. The angle value changes four times between DA and TA for four rotations of the rotor 60.

A step 0 corresponds to the origin, and a step n represents an n-th step from the origin. In FIG. 7, SM1 represents the order of the step at one cycle of the mechanical angle, SM2 represents the order of the step at two cycles of the mechanical angle, SM3 represents the order of the step at three cycles of the mechanical angle, and SM4 represents the order of the step at four cycles of the mechanical angle. The mechanical angle refers to an angle of a rotating member such as the rotor 60 in a real space.

The control circuit causes a driving current of a predetermined level to flow in the U-phase coil 73a. In this case, a driving current of the predetermined level is similarly caused to flow in each of the V-phase coil 73b and the W-phase coil 73c. The driving currents are caused to flow in the coils 73 to change the magnetic field of the coils 73 to rotate the rotor 60. A combination of current values of the driving currents applied to the U-phase coil 73a, the V-phase coil 73b, and the W-phase coil 73c will be referred to as an "excitation pattern". In the present embodiment, N kinds of excitation patterns are present. A change from one excitation pattern P1 to a next excitation pattern P2 corresponds to an instruction to rotate by "one step", that is, by the unit rotation amount.

When the excitation pattern is changed, that is, when the excitation pattern is changed by one step at a time, an instruction angle $\alpha$ (ideal rotor angle) is controlled. In synchronization with the change in the instruction angle $\alpha$, the rotor 60 rotates and the sensed angle $\theta$ also changes. After the excitation pattern is changed, the control circuit calculates the sensed angle $\theta$ from the angle value detected by the magnetic sensor 119, to determine whether or not the sensed angle $\theta$ (the actual rotor angle) follows the instruction angle $\alpha$. A state in which the sensed angle $\theta$ follows the instruction angle $\alpha$ will be referred to as "synchronous", and a state in which the sensed angle $\theta$ does not follow the instruction angle $\alpha$ will be referred to as "step out".

A pattern ID is assigned to each of the N excitation patterns. The driving current values of the U-phase coil 73a, the V-phase coil 73b, and the W-phase coil 73c in an excitation pattern with a pattern ID = N1 (hereinafter referred to as "excitation pattern (N1)") are represented by IU(N1), IV(N1), and IW(N1), respectively. Thus, the excitation pattern (N1) means the combination of [IU(N1), IV(N1), IW(N1)]. The driving currents IU(N1), IV(N1), and IW(N1) cause the coils 73 to produce magnetic fields to guide the rotor 60 to an instruction angle $\alpha$ based on the excitation pattern (N1).

The N pattern IDs are associated with N steps in one cycle of the electric angle. The electric angle is a theoretical value obtained by equally assigning the N pattern IDs to ranges of 0 to 360 degrees. Each of the steps n from the origin to the uppermost step are sequentially associated with the pattern IDs in a cycled manner. In addition, consecutive pattern IDs are associated with excitation patterns that change consecutively.

For shifting from a step n to a step n+1, the control circuit switches from an excitation pattern (N1) to an excitation pattern (N1+1). This changes the magnetic fields of the coils 73 with the driving current values [IU(N1+1), IV(N1+1), IW(N1+1)], and rotates the rotor 60 upward by a unit rotation amount. Conversely, for shifting from a step n to a step n-1, the control circuit switches from an excitation pattern (N1) to an excitation pattern (N1-1) This changes the magnetic fields of the coils 73 with the driving current values [IU(N1-1), IV(N1-1), IW(N1-1)], and rotates the rotor 60 downward by the unit rotation amount.

In the case of the rotor 60 having the structure illustrated in FIG. 3, because the rotor magnet 104 has five pairs of a north pole and a south pole, five cycles of the electric angle correspond to one rotation of the rotor 60 (360 degrees of the mechanical angle). In other words, one cycle of the electric angle corresponds to a mechanical angle of 72 degrees. In addition, because N steps are included in one cycle of the electric angle, the mechanical angle by which rotation is performed by a change of one step is u1=72/N degrees. Furthermore, as explained with reference to FIG. 7, in a case where the rotor 60 makes four rotations while the valve element 34 is moved from an uppermost point to the origin, the step is advanced by $4 \times 5 \times N$ during the entire movement. Thus, SM4 illustrated in FIG. 7 is $4 \times 5 \times N$. Similarly, SM1 is $5 \times N$, SM2 is $2 \times 5 \times N$, and SM3 is $3 \times 5 \times N$.

In the present embodiment, the position of the rotor 60 when the stopper 90 comes in contact with the guiding member 36 (technically speaking, the projection of the guiding member 36) is assumed to be the origin (reference position), and the control circuit records the angle value and the excitation pattern at this point as "origin information (reference information)". During manufacturing of the motor operated valve 1, origin information (reference information) specific to the motor operated valve 1 is recorded in a nonvolatile memory of the circuit board 118. The control circuit thus adjusts the amount of movement of the actuating rod 32, that is, the valve opening degree of the motor operated valve 1 by a step n with respect to the origin (valve closed position).

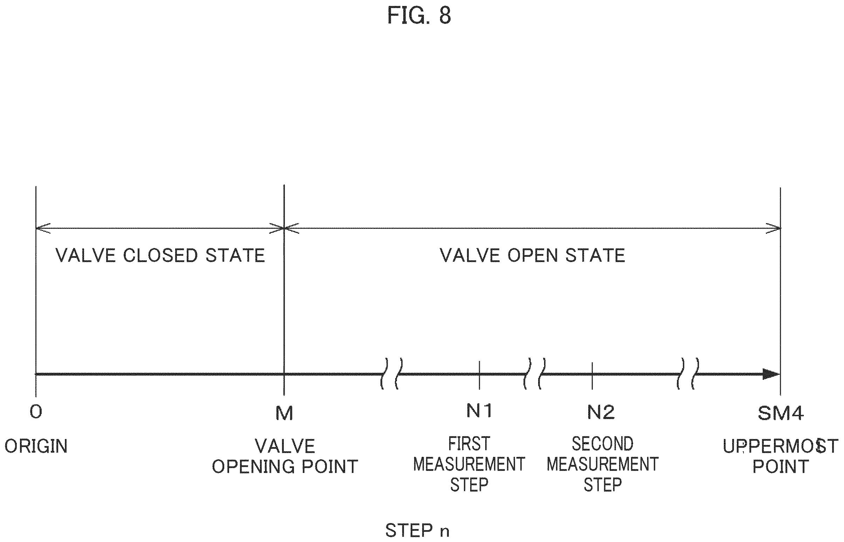

FIG. 8 is a schematic diagram of a range of movement of the rotor 60.

The rightward direction in FIG. 8 corresponds an opening direction (upward direction) of the rotor 60, and the leftward direction in FIG. 8 corresponds to a closing direction (downward direction) thereof. The origin at the step 0 is a limit position at which the stopper 90 is subjected to rotation restriction, and the rotor 60 cannot further rotate downward. A step M is a valve opening point at which the valve element 34 starts moving upward. The value of M is a predetermined common value. In the range from the origin to the valve opening point, the elastic reaction force of the spring 116 presses the valve element 34 against the valve seat 24, and the valve closed state is thus maintained. When the rotor 60 continues the upward rotation from the origin P0 and then passes through the valve opening point, the valve element 34 leaves the valve seat 24 and becomes in the valve open state. As the rotor 60 continues the upward rotation after passing through valve opening point, the valve opening degree gradually increases, and the flow rate from the inlet port 26 to the outlet port 28 increases.

In requirements specification relating to flow characteristics, a flow rate at a first measurement step N1 and a flow rate at a second measurement step N2 are defined. The flow rate used herein is a flow rate of refrigerant or a flow rate of air used for measurement in place of the refrigerant.

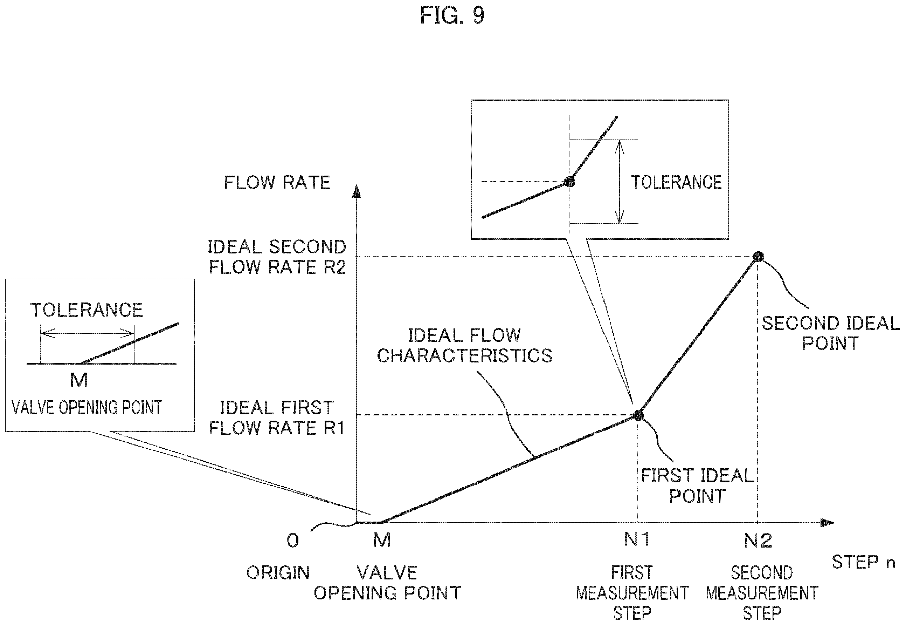

FIG. 9 is a graph illustrating ideal flow characteristics.

FIG. 9 illustrates ideal flow characteristics in accordance with the requirements specification relating to flow characteristics. The ideal flow characteristics of the motor operated valve 1 will be explained on the assumption that the step is advanced in the valve opening direction from the origin.

The flow rate is 0 from the origin to an ideal valve opening point M. The flow rate starts to be higher than 0 at the valve opening point M, and increases as the step n advances. A flow rate line showing the relation between the step n and the flow rate expresses the flow characteristics of the motor operated valve 1. In FIG. 9, the flow rate line expresses the ideal flow characteristics in accordance with the requirements specification.

In the requirements specification, a tolerance of a predetermined width for the step with a center point at the ideal valve opening point M is provided. In addition, for the flow rate at the first measurement step N1, a tolerance of a predetermined width for the flow rate with a center point at an ideal flow rate (hereinafter referred to as an "ideal first flow rate") is provided. For the flow rate at the second measurement step N2 as well, a tolerance of a predetermined width for the flow rate with a center point at an ideal flow rate (hereinafter referred to as an "ideal second flow rate") is provided.

A point representing the ideal first flow rate R1 at the first measurement step N1 is referred to as a "first ideal point". In addition, a point representing the ideal second flow rate R2 at the second measurement step N2 is referred to as a "second ideal point". While a line connecting the ideal valve opening point M with the first ideal point and a line connecting the first ideal point with the second ideal point express the flow rate line in FIG. 9, the flow rate line will be closer to a curve if ideal points at more measurement steps are provided.

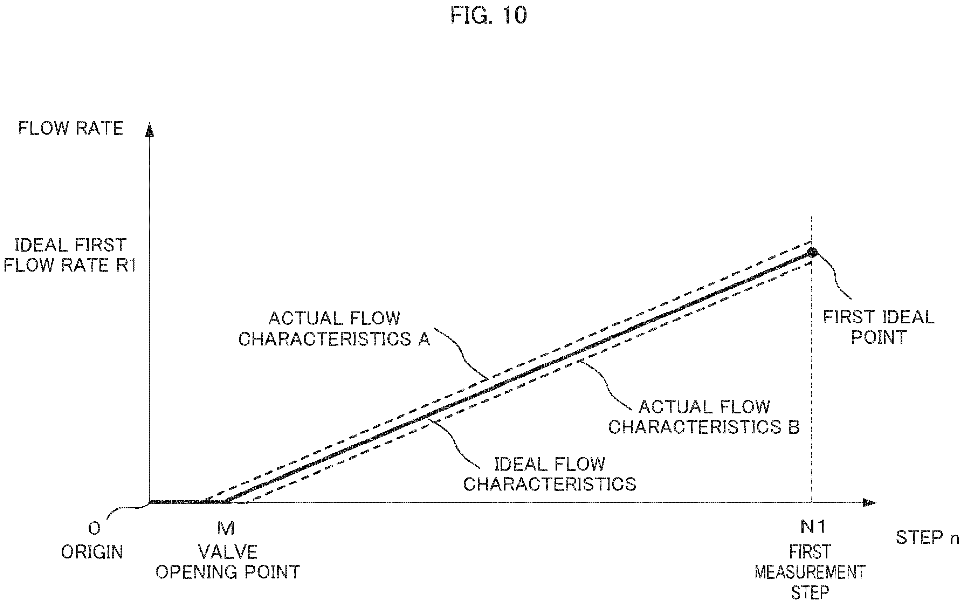

FIG. 10 is a graph illustrating actual flow characteristics.

The actual flow characteristics have errors depending on individual motor operated valves. In a case of a motor operated valve 1 having actual flow characteristics A as illustrated, the flow rate measured at a first measurement step is higher than the ideal flow rate. Conversely, in a case of a motor operated valve 1 having actual flow characteristics B as illustrated, the flow rate measured at a first measurement step is lower than the ideal flow rate.

In the present embodiment, assume that the shape of the flow rate line has little individual difference and is substantially the same for all motor operated valves 1. Thus, the slope of the flow rate line as illustrated is assumed to be constant. On this assumption, in the case of the ideal flow characteristics A, a valve opening point M appears at a step number smaller than an ideal step number. Conversely, in the case of the ideal flow characteristics B, a valve opening point M appears at a step number larger than an ideal step number. In this manner, a step error of the valve opening point M also occurs in addition to a flow rate error. From a different point of view, it can be said that the deviation of the actual valve opening point M causes a flow rate error.

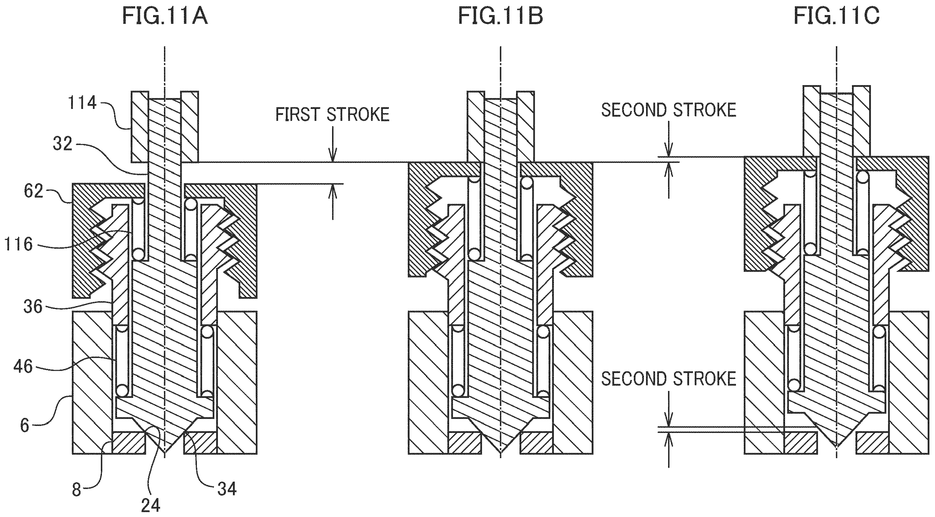

FIG. 11A is a schematic view illustrating a state at the origin.

In FIGS. 11A to 11C, the structure of the motor operated valve 1 is illustrated in a simplified manner. At the origin, the rotating shaft 62 is at the lowest position, and the valve element 34 is in contact with the valve seat 24. The flow rate is therefore 0. When the rotating shaft 62 makes upward rotation from this state, the rotating shaft 62 moves upward.

FIG. 11B is a schematic view illustrating a state at the valve opening point.

At the valve opening point M, the rotating shaft 62 that has moved upward is in contact with the stopper 114. The valve opening point M is a point immediately before the valve element 34 leaves the valve seat 24, at which refrigerant or air starts to flow. As the rotating shaft 62 moves further upward, the rotating shaft 62 lifts up the stopper 114. In this process, the actuating rod 32 is lifted integrally with the stopper 114.

FIG. 11C is a schematic view illustrating a valve open state.

During the valve open state, the stopper 114 is displaced upward by a second stroke from its position at the valve opening point, and the actuating rod 32 is similarly displaced upward by the second stroke. As a result, the valve element 34 leaves the valve seat 24 and a gap corresponding to the second stroke is produced therebetween. The flow rate thus becomes higher than 0. As the rotating shaft 62 further makes upward rotation, the flow rate increases.

As described above, the rotating shaft 62 moves upward by a first stroke as illustrated from the origin to the valve opening point M. The first stroke corresponds to a length between the upper end of the rotating shaft 62 and the stopper 114 at the origin. The number of steps that cause rotational movement corresponding to axial movement corresponding to the first stroke is the step number at the valve opening point M.

There is, however, individual differences in the first stroke. When the stopper 114 is mounted at a higher position in assembly of the motor operated valve 1, the first stroke is longer. Conversely, when the stopper 114 is mounted at a lower position, the first stroke is shorter. As the first stroke is longer, the step number at the valve opening point is larger. As the first stroke is shorter, the step number at the valve opening point is smaller. In this manner, the step number at the valve opening point varies depending on errors in assembly of the motor operated valve 1.

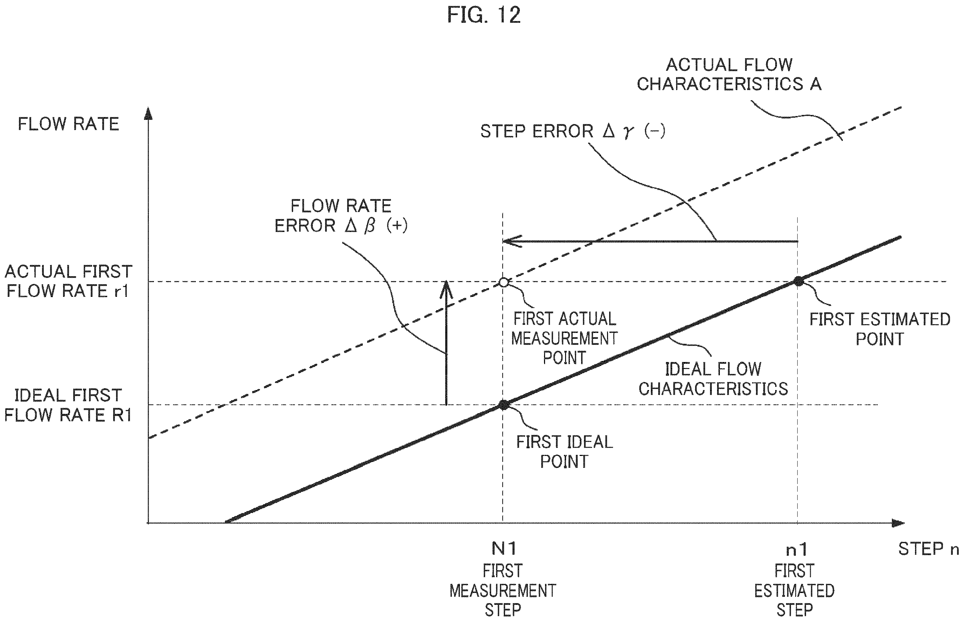

FIG. 12 is a graph illustrating an overview of an error at an actual measurement point.

A error occurring in the motor operated valve 1 will be explained focusing on the actual flow characteristics A illustrated in FIG. 10. As described above, a flow rate line showing the actual flow characteristics A appears above a flow rate line showing the ideal flow characteristics. Hereinafter, a point indicating an actual first flow rate r1 measured at the first measurement step N1 will be referred to as a "first actual measurement point". The first actual measurement point is located above the first ideal point, and the motor operated valve 1 subjected to measurement has a flow rate error $\Delta\beta$ corresponding to a result of subtracting the ideal first flow rate R1 from the first flow rate r1 at the first measurement step N1. Thus, the flow rate error $\Delta\beta$ is defined by the following formula 1.

```
(flow rate error Δβ) = (actual first flow rate r1) - (ideal
first flow rate R1)    [Formula 1]
```

In the case of the actual flow characteristics A, the flow rate error $\Delta\beta$ is a positive value. In the case of the actual flow characteristics B (see FIG. 10), the flow rate error $\Delta\beta$ is a negative value.

In addition, the flow rate line showing the actual flow characteristics A can be regarded as being on the left of the flow rate line showing the ideal flow characteristics. Estimate a point on the ideal flow rate line at which the flow rate is the same as the actual first flow rate r1. This point will be referred to as a "first estimated point". A first estimated step n1 at the first estimated point refers to a step at which the flow rate is ideally estimated to be the first flow rate r1. The first actual measurement point is located on the left of the first estimated point, and the motor operated valve 1 subjected to measurement has a step error $\Delta\gamma$ corresponding to a result of subtracting the first estimated step n1 from the first measurement step N1 at the level of the actual first flow rate r1. Thus, the step error $\Delta\gamma$ is defined by the following formula 2.

```
(step error Δγ) = (first measurement step N1) - (first
estimated step n1)    [Formula 2]
```

In the case of the actual flow characteristics A, the step error $\Delta\gamma$ is a negative value. In the actual flow characteristics B (see FIG. 10), the step error $\Delta\gamma$ is a positive value.

When the slope of the flow rate line at the first measurement step N1 is represented by G, the relation expressed by a formula 3 below is satisfied. The slope G represents an amount of change in the flow rate per step.

$$\text{(flow rate error } \Delta\beta) = (-\text{slope G}) \times (\text{step error } \Delta\gamma)$$

[Formula 3]

The slope G is obtained in advance before the manufacturing stage. A simple method for obtaining the slope G is using the slope of the flow rate line showing the ideal flow characteristics illustrated in FIG. 10. In the present embodiment, because the shape of the flow rate line is assumed to have little individual difference and be constant, the slope of the flow rate line showing the actual flow characteristics A and the slope of the flow rate line showing the actual flow characteristics B are equal to the slope of the flow rate line showing the ideal flow characteristics. The flow rates at steps before and after the first measurement step N1 may be measured and the slope of the flow rate line at the first measurement step N1 may be obtained on the basis the measurement results.

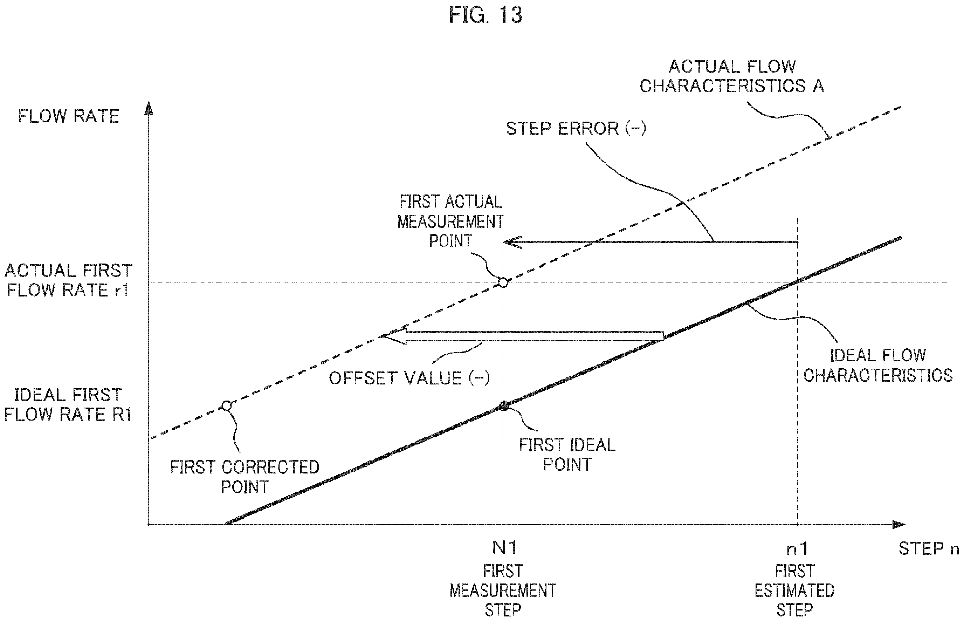

FIG. 13 is a graph illustrating an outline of an offset value.
In the present embodiment, a step number used for controlling the rotation of the rotor is corrected. Control of the rotation using a step number corrected by adding an offset value to a step number enables the motor operated valve 1 to operate with a behavior close to the ideal flow characteristics.

Specifically, an offset value equal to a step error $\Delta\gamma$ is determined for each individual motor operated valve 1. For controlling the rotation, an excitation pattern is identified on the basis of the step number obtained by addition of the offset value, and driving currents are applied to the coils of the respective phases. Assume, for example, that the step number at the valve opening point M is 50 and the step error of the actual flow characteristics A is -5. When a movement command to the step number 50 is issued from an external device and movement to the step number 50 is thus made, the motor operated valve 1 enters the valve open state. In contrast, when movement to a step number 45 obtained by adding the offset value of -5 is made, the motor operated valve 1 becomes the same state as the ideal valve opening point M. Conversely, if the step error of the actual flow characteristics B is 5, movement to a step number 55 obtained by adding the offset value of 5 makes the motor operated valve 1 become the same state as the ideal valve opening point M.

The step number specified by the external device is based on the ideal flow characteristics. Thus, a process of modifying the step number to be adapted to the actual flow characteristics is performed. In FIG. 13, the arrow of the offset value (-) extending from the line of the ideal flow characteristics to the line of the actual flow characteristics A means converting a parameter based on the ideal (ideal step number) into a parameter adapted to the actuals. For example, when the motor operated valve 1 having the actual flow characteristics A is instructed to move to the first measurement step N1, the ideal first flow rate R1 can be obtained as intended as a result of movement to a first corrected point as illustrated.

The offset value of the step is defined by the following formula 4.

$$\text{(step number offset value)} = \text{step error } \Delta\gamma) \qquad \text{[Formula 4]}$$

As a result of rewriting the formula 4 by using the formula 3, a formula 5 is obtained.

$$\begin{aligned}
&\text{(step number offset value)} \\
&= (-\text{flow rate error } \Delta\beta) / (\text{slope G}) \\
&= (\text{ideal first flow rate R1}) - (\text{actual first flow rate r1}) \\
&/ (\text{slope G}) \qquad \text{[Formula 5]}
\end{aligned}$$

According to the formula 5, in the motor operated valve 1 having the actual flow characteristics A, because the actual first flow rate r1 is higher than the ideal first flow rate R1, the step number offset value is a negative value. Conversely, in the motor operated valve 1 having the actual flow characteristics B, because the ideal first flow rate R1 is higher than the actual first flow rate r1, the step number offset value is a positive value. The explanation made so far relates to an adjustment process at the manufacturing stage.

As described above, measurement of flow rates is performed on each individual motor operated valve 1 at the manufacturing stage, and the offset values are set for each motor operated valve 1. The step number offset values are stored in a nonvolatile storage area of the motor operated valve control device. Then, at a stage when the motor operated valve 1 is mounted on an automotive air conditioner or the like after being shipped, the motor operated valve 1 modifies a step number of an instruction during operation by using the step number offset value held therein. This enables each motor operated valve 1 to cancel out the influence of assembly error specific to the motor operated valve 1 on the flow characteristics, and achieves behavior similar to the ideal flow characteristics as observed from the external device. Practically, the flow characteristics of the motor operated valves 1 can be equalized.

Note that, at the mounted stage, the motor operated valve control device correct the step number in accordance with the following formula 6.

$$(\text{corrected step number})$$
$$= (\text{step number before correction}) + (\text{step number offset}$$
$$\text{value}) \qquad [\text{Formula 6}]$$

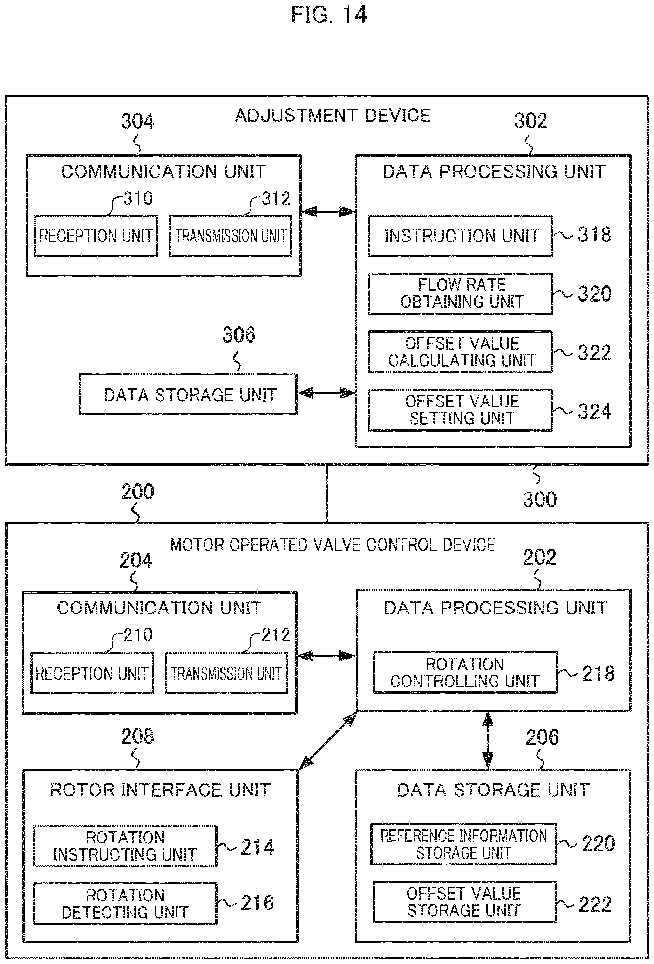

FIG. 14 is a functional block diagram of an adjustment device 300 and a motor operated valve control device 200. In the present embodiment, the adjustment device 300 connected with the motor operated valve control device 200 obtains step number offset values and sets the obtained offset values in the motor operated valve control device 200 at the manufacturing stage. Because step number offset values adapted to individual motor operated valves 1 are set in the individual motor operated valve control devices 200, adjustment that absorbs the influence of assembly can be performed on each individual motor operated valve 1. Such adjustment adapted to each individual motor operated valve 1 leads to stable quality of mass-produced products. The adjustment can be performed without extremely increasing the accuracy of assembly of the motor operated valves 1, which also contributes to reduction of manufacturing cost.

Respective components of the adjustment device 300 are implemented by hardware including computing units such as central processing units (CPUs) and various co-processors, storage devices such as memories and storages, and wired or wireless communication lines that connect these units and devices, and software that is stored in the storage devices and supplies processing instructions to the computing units. Computer programs may be constituted by device drivers, operating systems, various application programs on upper layers thereof, and a library that provides common functions to these programs. Blocks that are illustrated do not refer to configurations in units of hardware but to blocks in units of functions.

The adjustment device 300 includes a data processing unit 302, a communication unit 304, and a data storage unit 306. The communication unit 304 performs communication processing via a communication path connected with the motor operated valve control device 200. The data storage unit 306 stores various data. The data processing unit 302 performs various processes on the basis of data obtained by the communication unit 304 and data stored in the data storage unit 306. The data processing unit 302 also functions as an interface of the communication unit 304 and the data storage unit 306.

The communication unit 304 includes a transmission unit 312 that transmits data and commands (such as a step movement command and an offset value writing command, for example), and a reception unit 310 that receives data.

The data processing unit 302 includes an instruction unit 318, a flow rate obtaining unit 320, an offset value calculating unit 322, and an offset value setting unit 324. The instruction unit 318 provides various instructions, such as search for the origin, to the motor operated valve control device 200. The flow rate obtaining unit 320 obtains a flow rate at the outlet port 28 of the motor operated valve 1 from a measurement device in which the motor operated valve 1 is set. Alternatively, the flow rate obtaining unit 320 obtains a flow rate input by an operator. In other words, the adjustment device 300 may be connected with the measurement device and obtain a flow rate by the reception unit 310 from the measurement device via communication, or an operator may read a flow rate displayed on the measurement device and input to an input unit (not illustrated) of the adjustment device 300.

The offset value calculating unit 322 calculates a step number offset value on the basis of the result of measurement of the flow rate. Specifically, the offset value calculating unit 322 calculates a step error by dividing a flow rate error, which is a difference between an actual flow rate and an ideal flow rate of the motor operated valve 1 at a predetermined measurement step, by an amount of change in the flow rate per step in the motor operated valve 1, and identifies the step number offset value on the basis of the step error. The offset value setting unit 324 sets the step number offset value in the motor operated valve control device 200.

Respective components of the motor operated valve control device 200 are implemented by hardware (control circuit) including the control circuit (microcomputer) on the circuit board 118, storage devices such as memories and storages, and wired or wireless communication lines that connect these units and devices, and software that is stored in the storage devices and supplies processing instructions to the computing units. Computer programs may be constituted by device drivers, application programs, and a library that provides common functions to these programs. Blocks to be described below do not refer to configurations in units of hardware but to blocks in units of functions.

The motor operated valve control device 200 includes a data processing unit 202, a communication unit 204, a data storage unit 206, and a rotor interface unit 208.

The communication unit 204 functions as an interface to an external device or the adjustment device via a connection terminal 81. The rotor interface unit 208 functions as an interface to the magnetic sensor 119 and the coil units 75. The data processing unit 202 performs various processes on the basis of data stored in the data storage unit 206 and various data obtained from the communication unit 204 and the rotor interface unit 208. The data processing unit 202 also functions as an interface of the communication unit 204, the rotor interface unit 208, and the data storage unit 206.

The communication unit 204 includes a reception unit 210 that receives data and commands (such as a step movement command and an offset value writing command, for example) from the adjustment device used at the manufacturing stage or the external device used at the mounted stage, and a transmission unit 212 that transmits data to the external device or the adjustment device.

The rotor interface unit 208 includes a rotation instructing unit 214 and a rotation detecting unit 216. The rotation instructing unit 214 applies driving currents to the stepping motor in accordance with an excitation pattern. Specifically, the rotation instructing unit 214 outputs driving currents as specified by the excitation pattern to the U-phase coil 73a, the V-phase coil 73b, and the W-phase coil 73c. The rotation detecting unit 216 reads the duty cycle from pulses of current received from the magnetic sensor 119.

The data processing unit 202 includes a rotation controlling unit 218. The rotation controlling unit 218 controls the rotation instructing unit 214 on the basis of the origin information (reference information), the step number offset values, and the like. Specifically, the rotation controlling unit 218 corrects each step number, which is sequentially switched in accordance with a step movement command, on the basis of an offset value, and identifies an excitation pattern associated with the corrected step number.

The data storage unit 206 includes a reference information storage unit 220 and an offset value storage unit 222. The reference information storage unit 220 stores origin information (reference information) set for each individual motor operated valve 1. The offset value storage unit 222 stores step number offset values set for each individual motor operated valve 1. The reference information storage unit 220 and the offset value storage unit 222 are storage areas in a nonvolatile memory.

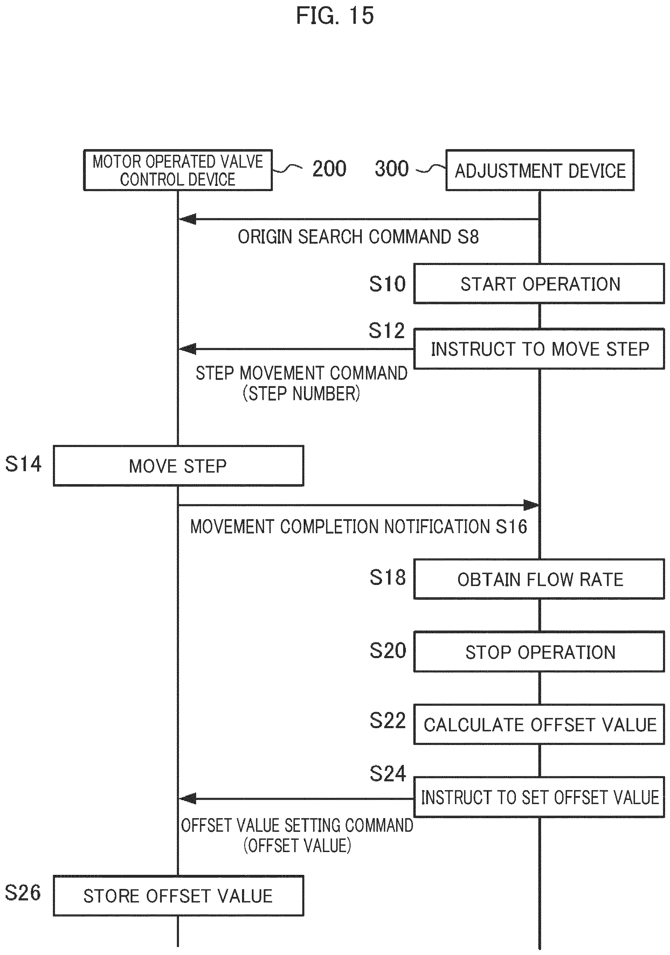

FIG. 15 is a sequence diagram illustrating processing of the adjustment process.

The adjustment process is performed at the end of the manufacturing stage, for example. Thus, the assembly of the motor operated valve 1 including the motor operated valve control device 200 is assumed to be completed. In addition, the motor operated valve 1 is set in the measurement device that implements the whole or part of the refrigeration cycle. The measurement device has a function of sending compressed refrigerant or air into the inlet port 26, and a function of measuring the flow rate of the refrigerant or air discharged from the outlet port 28. In this example, the adjustment device 300 is connected with the measurement device, and can control the measurement device to obtain measurement data from the measurement device.

The instruction unit 318 of the adjustment device 300 instructs the motor operated valve control device 200 to search for the origin (S8). In this process, an origin search command is transmitted from the transmission unit 312 of the adjustment device 300. In accordance with this command, the motor operated valve control device 200 performs the origin searching operation of moving the valve element 34 to the position of the origin.

The operation of the measurement device is started (S10). The adjustment device 300 may control the measurement device to start operating, or an operator may operate the measurement device to start operating. Alternatively, the operation of the measurement device may be started before the aforementioned process of searching for the origin (S8) is performed.

At a stage where the state of the refrigerant or air in the measurement device has become stable, the instruction unit 318 of the adjustment device 300 instructs the motor operated valve control device 200 to move the step (S12). Specifically, the transmission unit 312 of the adjustment device 300 transmits a step movement command including a destination step number to the motor operated valve control device 200. In this process, the number of a predetermined measurement step (the first measurement step, for example) is specified.

When the reception unit 210 of the motor operated valve control device 200 has received the step movement command, the rotation controlling unit 218 starts step movement to the specified destination step number (S14). Specifically, the rotation controlling unit 218 sequentially switches the step number toward the specified step number and indicates the excitation pattern associated with the step number to the rotation instructing unit 214. The rotation instructing unit 214 switches the driving currents to be applied to the coils of respective phases in accordance with the excitation pattern. When the step has been moved to the specified destination step number, the transmission unit 212 of the motor operated valve control device 200 transmits a movement completion notification to the adjustment device 300 (S16).

When the reception unit 310 of the adjustment device 300 has received the movement completion notification, the flow rate obtaining unit 320 of the adjustment device 300 obtains the flow rate of the refrigerant or air discharged from the outlet port 28 of the motor operated valve 1 from the measurement device (S18). The flow rate obtaining unit 320 may obtain the flow rate of the refrigerant or air manually input by an operator. The operation of the measurement device is then stopped (S20). The adjustment device 300 may control the measurement device to stop operating, or an operator may operate the measurement device to stop operating. Alternatively, subsequent processing may be performed without stopping the operation of the measurement device.

The offset value calculating unit 322 calculates a step number offset value by applying the obtained flow rate to the aforementioned formula 5 (S22). After the process of calculating the offset value is completed, the offset value setting unit 324 sets the step number offset value in the motor operated valve control device 200. Specifically, the transmission unit 312 transmits an offset value writing command, to which the step number offset value is added, to the motor operated valve control device 200 (S24).

When the reception unit 210 of the motor operated valve control device 200 has received the offset value writing command, the rotation controlling unit 218 stores the step number offset value added to the received offset value writing command in the offset value storage unit 222 (S26).

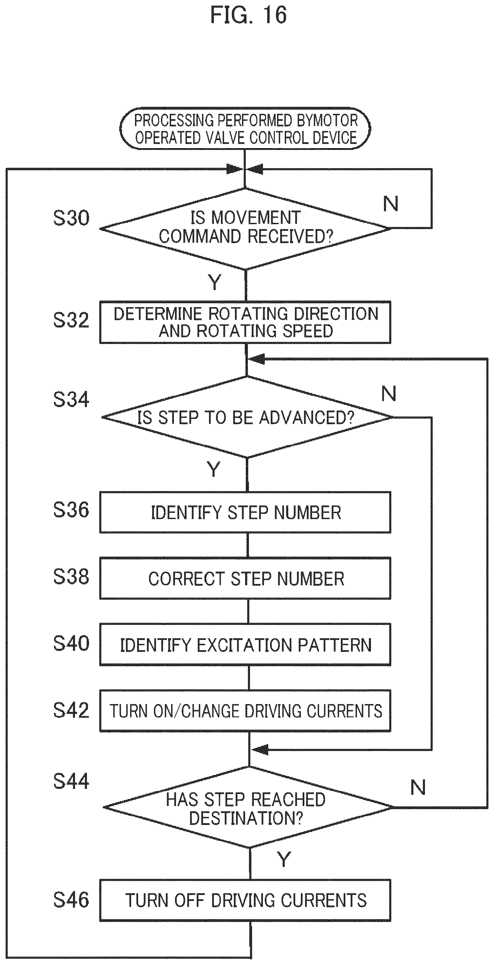

FIG. 16 is a flowchart processing performed by the motor operated valve control device 200. Herein, the processing at the mounted stage using the motor operated valve control device 200 in which the step number offset value is set will be explained.

When the reception unit 210 has received, from the external device, a step movement command including the destination step number (Y in S30), the rotation controlling unit 218 determines a rotating direction and a rotating speed in accordance with the step movement command (S32). The rotation controlling unit 218 determines whether or not to advance the step immediately on the basis of the rotating direction and the rotating speed (S34). If the step is to be advanced (Y in S34), the rotation controlling unit 218 identifies the next step number on the basis of the rotating direction (S36). The rotation controlling unit 218 corrects the step number (S38). Specifically, the rotation controlling unit 218 calculates a corrected step number by adding the step number offset value read from the offset value storage unit 222 to the next step number in accordance with the formula 6. The rotation controlling unit 218 identifies an excitation pattern for the corrected step number on the basis of the association between the step n and the excitation pattern (S40). In this process, if the rotation instructing unit 214 is powered off, the rotation controlling unit 218 powers on the rotation instructing unit 214. The rotation controlling unit 218 also indicates the excitation pattern to the rotation instructing unit 214, and the rotation instructing unit 214 changes the driving currents to values in accordance with the excitation pattern (S42). Thus, driving currents for the respective phases in accordance with the excitation pattern are applied to the coils of the motor unit 3.

The rotation controlling unit 218 determines whether or not processing has been completed to the destination step number (S44). If processing has not been completed to the destination step number (N in S44), the rotation controlling unit 218 returns to the process in S34 and repeats the processes described above. If processing has been completed to the destination step number (Y in S44), the rotation controlling unit 218 powers off the rotation instructing unit 214 (S46). Alternatively, the rotation controlling unit 218 changes the power to the rotation instructing unit 214 to a predetermined value of standby current, and maintains the value. As a result, the valve is stopped and the posture of the rotor 60 is maintained.

[First Modification]

A step number offset value may be a difference between the step number at an actual valve opening point and the step number at an ideal valve opening point. The step number offset value is obtained by the following formula 7.

$$(\text{step number offset value})$$
$$= (\text{step number at actual valve opening point}) - (\text{step number at ideal valve opening point}) \quad [\text{Formula 7}]$$

In the adjustment process, after starting the operation of the measurement device, the adjustment device 300 transmits a step movement command specifying a step number smaller than that at the valve opening point M to the motor operated valve control device 200. The motor operated valve control device 200 controls the motor to move to the specified step. Subsequently, the adjustment device 300 transmits a step movement command in which the step number is increased for upward rotation by one step at a time. The motor operated valve control device 200 makes the motor unit 3 rotate upward by one step at a time. The adjustment device 300 obtains a flow rate at each step from the measurement device, identifies a step at which the flow rate becomes higher than 0 for the first time, and determines the step number or a step number obtained by subtracting 1 from the step number as the step number at the actual valve opening point. The adjustment device 300 then calculates a step number offset value in accordance with the formula 7 (S22). In other words, the offset value calculating unit 322 calculates a difference between the step number at the actual valve opening point and the step number at the ideal valve opening point of the motor operated valve 1, and identifies the step number offset value on the basis of the difference between the step numbers. The processing at the mounted stage using the motor operated valve control device 200 is the same as that in the embodiment.

In this modification, the time required for the adjustment process is longer, but more accurate offset values can be obtained.

[Second Modification]

As described in JP 2017-106686 A and JP 2003-113948 A, there is a motor operated valve (a ball valve, for example) having such a structure in which the rotational movement of a rotor is directly transmitted to rotate a valve element. According to this type of motor operated valve, the flow rate of refrigerant flowing through a passage in the valve element is adjusted by turning the valve element. This type of motor operated valve has a mechanism that changes the valve opening degree by the rotational movement of the rotor. In the motor operated valve described in the embodiment, the rotational movement of the rotor is converted into the axial movement of the valve element. In this type of motor operated valve, however, the rotational movement of the rotor is directly transmitted as rotation of the valve element and causes the valve opening/closing operation based on the shape of the opening of the valve element. In the motor operated valve of this rotating type as well, the flow rate changes depending on the rotation angle of the rotor, and there is correlation between the number of steps and the flow rate. Thus, in a manner similar to the motor operated valve of the embodiment, the technologies described in the embodiment and the first modification can be applied to the motor operated valve of this rotating type.

In the embodiment described above, an example of a structure in which the magnetic sensor 119 faces the sensor magnet 106 along the axial direction has been presented (see FIG. 1). In a modification, the magnetic sensor may be positioned on a lateral side (radially outside) of the sensor magnet. Thus, the magnetic sensor and the sensor magnet may radially face each other. The sensor magnet may be magnetized on the outer circumferential face thereof. The number of poles thereof can be appropriately set, such as two.

In the embodiment described above, an example of a structure in which the rotor magnet 104 and the sensor magnet 106 are separated from each other along the axial direction has been presented. In a modification, the rotor magnet and the sensor magnet may be integrated. In a process of forming the magnet part, the rotor magnet part and a sensor magnet part may be formed integrally. In this case, the area (outer diameter) of the sensor magnet may be increased so that the magnetic sensor can reliably detect magnetic flux. As a result, the sensor magnet sticks out of the outer circumference of the rotor core, which makes injection molding of the sensor magnet and the rotor magnet easier.

In the embodiments, the laminated core (laminated magnetic core) has been presented as an example of the stator core. In a modification, a powder core or other cores may be employed. A powder core is also called a "powder magnetic core", and obtained by reducing a soft magnetic material to powder, kneading powder coated with non-conductive resin or the like and resin binder, and compression molding and heating the kneaded material.

While an example of the structure in which the drive circuit, the control circuit, the communication circuit, and the power supply circuit are mounted on the lower face of the circuit board has been presented in the embodiments, the circuits that are mounted may be changed as appropriate. For example, a drive circuit and a power supply circuit may be mounted thereon, and a control circuit may be provided outside the motor operated valve. Alternatively, the circuits may be mounted on the upper face of the circuit board.

While a PM stepping motor is employed as the motor unit in the embodiments, a hybrid stepping motor may alternatively be employed. In addition, while the motor unit is a three-phase motor in the embodiments, the motor unit may be a motor other than a three-phase motor, such as a two-phase, four-phase, or five-phase motor. The number of electromagnetic coils in the stator is not limited to three or six, but may be appropriately set depending on the number of phases of the motor.

While the motor operated valve of the embodiments is suitably applicable to a refrigeration cycle using an alternative for chlorofluorocarbon (HFC-134a) or the like as the refrigerant, the motor operated valve can also be applied to a refrigeration cycle using a refrigerant with high working pressure, such as carbon dioxide. In this case, an external heat exchanger such as a gas cooler is provided instead of the condenser in the refrigeration cycle.

While the motor operated valve is an expansion valve in the embodiments, the motor operated valve may be an on-off valve or a flow control valve without an expanding function.

While an example in which the motor operated valve is applied to a refrigeration cycle in an automotive air conditioner has been presented in the embodiment, the motor operated valve can also be applied to an air conditioner including a motor operated expansion valve other than those for vehicles. Furthermore, the motor operated valve may be a motor operated valve for controlling a flow of fluid other than refrigerant.

The motor operated valve 1 in the present embodiment can also be applied to various automobiles in addition to electric vehicles.

The sensor magnet 106 may be magnetized with four poles on both faces (magnetized on both faces with two poles on each face). Reverse polarities of the poles on the upper face and the lower face enhance the magnetic flux. In this case, even when the rotor 60 moves in the valve closing direction and the distance between the sensor magnet 106 and the magnetic sensor 119 is increased, the sensitivity of the magnetic sensor 119 can be kept high.

**Claims**

1. A motor operated valve control device (200) that controls a motor operated valve (1) including a stepping motor (3) for rotating a rotor (60) by a driving current applied in accordance with an excitation pattern associated with a step, and a mechanism (109) for changing a valve opening degree by rotational movement of the rotor (60), the motor operated valve control device (200) comprising:

   an offset value storage unit (222) that stores a step number offset value set for each individual motor operated valve (1);
   a reception unit (210) that receives a step movement command;
   a rotation controlling unit (218) that corrects a step number on the basis of the step number offset value, and identifies the excitation pattern associated with the corrected step number, the step number being sequentially switched on the basis of the step movement command; and
   a rotation instructing unit (214) that applies the driving current to the stepping motor (3) in accordance with the identified excitation pattern.

2. The motor operated valve control device (200) according to claim 1, wherein

   the reception unit (210) receives an offset value writing command with the step number offset value added, and
   the rotation controlling unit (218) stores the step number offset value added to the received offset value writing command in the offset value storage unit (222).

3. An adjustment device (300) connected with a motor operated valve control device (200) that controls a motor operated valve (1) including a stepping motor (3) for rotating a rotor (60) by a driving current applied in accordance with an excitation pattern associated with a step, and a mechanism (109) for changing a valve opening degree by rotational movement of the rotor (60), the adjustment device (300) comprising:

   an offset value calculating unit (322) that calculates a step error by dividing a flow rate error by an amount of change in a flow rate per step in the motor operated valve (1), and identifies a step number offset value on the basis of the step error, the flow rate error being a difference between an actual flow rate and an ideal flow rate of the motor operated valve (1) at a predetermined step; and
   an offset value setting unit (324) that sets the identified step number offset value in the motor operated valve control device (200).

4. An adjustment device (300) connected with a motor operated valve control device (200) that controls a motor operated valve (1) including a stepping motor (3) for rotating a rotor (60) by a driving current applied in accordance with an excitation pattern associated with a step, and a mechanism (109) for changing a valve opening degree by rotational movement of the rotor (60), the adjustment device (300) comprising:

   an offset value calculating unit (322) that calculates a difference between a step number at an actual valve opening point and a step number at an ideal valve opening point of the motor operated valve (1), and identifies a step number offset value on the basis of the difference between the step numbers; and
   an offset value setting unit (324) that sets the identified step number offset value in the motor operated valve control device (200).

5. A motor operated valve control program causing a computer (200) that controls a motor operated valve (1) including a stepping motor (3) for rotating a rotor (60) by a driving current applied in accordance with an excitation pattern associated with a step, and a mechanism (109) for changing a valve opening degree by rotational movement of the rotor (60) to implement:

   a function (S26) of storing a step number offset value set for each individual motor operated valve (1);
   a function (S30) of receiving a step movement command;
   a function (S38, S40) of correcting a step number on the basis of the step number offset value, and identifying the excitation pattern associated with the corrected step number, the step number being sequentially switched on the basis of the step movement command; and
   a function (S42) of applying the driving current to the stepping motor (3) in accordance with the identified excitation pattern.

6. An adjustment program causing a computer (300) connectable to a motor operated valve control device (200) that controls a motor operated valve (1) including a stepping motor (3) for rotating a rotor (60) by a driving current applied in accordance with an excitation pattern associated with a step, and a mechanism (109) for changing a valve opening degree by rotational movement of the rotor (60) to implement:

   a function (S22) of calculating a step error by dividing a flow rate error by an amount of change in a flow rate per step in the motor operated valve (1), and identifying a step number offset value on the basis of the step error, the flow rate error being a difference between an actual flow rate and an ideal flow rate of the motor operated valve (1) at a predetermined step; and
   a function (S24) of setting the identified step number offset value in the motor operated valve control device (200).

7. An adjustment program causing a computer (300) connectable to a motor operated valve control device (200) that controls a motor operated valve (1) including a stepping motor (3) for rotating a rotor (60) by a driving current applied in accordance with an excitation pattern associated with a step, and a mechanism (109) for changing a valve opening degree by rotational movement of the rotor (60) to implement:

   a function (S22) of calculating a difference between a step number at an actual valve opening point and a step number at an ideal valve opening point of the motor operated valve (1), and identifying a step number offset value on the basis of the difference between the step numbers; and
   a function (S24) of setting the identified step number offset value in the motor operated valve control device (200).

# FIG. 1

FIG.2A

FIG.2B

FIG.3A

106

60

102

104

FIG.3C

106

B

B

104

FIG.3B

106

S    N

102

N  S  N  S  N

104

FIG.3D

106   144

102

140

104

## FIG. 4

FIG. 5

## FIG. 6

# FIG. 7

SECOND CYCLE OF
MECHANICAL ANGLE

FOURTH CYCLE OF
MECHANICAL ANGLE

FIRST CYCLE OF
MECHANICAL ANGLE

THIRD CYCLE OF
MECHANICAL ANGLE

ANGLE VALUE
(DUTY CYCLE)

TA

DA

0          SM1          SM2          SM3          SM4

STEP n

FIG. 8

| VALVE CLOSED STATE | VALVE OPEN STATE |

O — ORIGIN
M — VALVE OPENING POINT
N1 — FIRST MEASUREMENT STEP
N2 — SECOND MEASUREMENT STEP
SM4 — UPPERMOST POINT

STEP n

EP 4 141 301 A2

# FIG. 9

EP 4 141 301 A2

FIG. 10

FLOW RATE

IDEAL FIRST
FLOW RATE R1

ACTUAL FLOW
CHARACTERISTICS A

FIRST IDEAL
POINT

ACTUAL FLOW
CHARACTERISTICS B

IDEAL FLOW
CHARACTERISTICS

O
ORIGIN

M
VALVE
OPENING POINT

N1
FIRST
MEASUREMENT
STEP

STEP n

EP 4 141 301 A2

FIG.11A       FIG.11B       FIG.11C

FIRST STROKE

SECOND STROKE

SECOND STROKE

EP 4 141 301 A2

FIG. 12

ACTUAL FLOW
CHARACTERISTICS A

STEP ERROR Δγ (−)

FLOW RATE

FLOW RATE
ERROR Δβ (+)

ACTUAL FIRST
FLOW RATE r1

FIRST ACTUAL
MEASUREMENT
POINT

FIRST ESTIMATED
POINT

IDEAL FLOW
CHARACTERISTICS

IDEAL FIRST
FLOW RATE R1

FIRST IDEAL
POINT

N1
FIRST
MEASUREMENT
STEP

n1
FIRST
ESTIMATED
STEP

STEP n

EP 4 141 301 A2

## FIG. 13

EP 4 141 301 A2

FIG. 14

```
┌─────────────────────────────────────────────────────────────────────────────┐
│                            ADJUSTMENT DEVICE                                   │
│        304                                              302                    │
│  ┌──────────────────────────────────┐    ┌────────────────────────────────┐  │
│  │        COMMUNICATION UNIT         │    │      DATA PROCESSING UNIT      │  │
│  │    ┌─310┐         ┌─312┐          │    │                                │  │
│  │    │          │   │            │  │◄──►│   ┌──────────────────────┐     │  │
│  │    │RECEPTION │   │TRANSMISSION│  │    │   │  INSTRUCTION UNIT    │~318 │  │
│  │    │   UNIT   │   │    UNIT    │  │    │   └──────────────────────┘     │  │
│  │    └──────────┘   └────────────┘  │    │   ┌──────────────────────┐     │  │
│  └──────────────────────────────────┘    │   │     FLOW RATE        │~320 │  │
│                                           │   │  OBTAINING UNIT      │     │  │
│              306                          │   └──────────────────────┘     │  │
│  ┌──────────────────────────────┐        │   ┌──────────────────────┐     │  │
│  │      DATA STORAGE UNIT        │◄──────►│   │   OFFSET VALUE       │~322 │  │
│  │                              │         │   │  CALCULATING UNIT    │     │  │
│  └──────────────────────────────┘        │   └──────────────────────┘     │  │
│                                           │   ┌──────────────────────┐     │  │
│                                           │   │   OFFSET VALUE       │~324 │  │
│                                           │   │   SETTING UNIT       │     │  │
│                                           │   └──────────────────────┘     │  │
│                                           │                          300   │  │
│                                           └────────────────────────────────┘  │
└─────────────────────────────────────────────────────────────────────────────┘
        200                                              300

┌─────────────────────────────────────────────────────────────────────────────┐
│                    MOTOR OPERATED VALVE CONTROL DEVICE                         │
│        204                                              202                    │
│  ┌──────────────────────────────────┐    ┌────────────────────────────────┐  │
│  │        COMMUNICATION UNIT         │    │      DATA PROCESSING UNIT      │  │
│  │    ┌─210┐         ┌─212┐          │    │                                │  │
│  │    │RECEPTION │   │TRANSMISSION│  │◄──►│   ┌──────────────────────┐     │  │
│  │    │   UNIT   │   │    UNIT    │  │    │   │     ROTATION         │~218 │  │
│  │    └──────────┘   └────────────┘  │    │   │ CONTROLLING UNIT     │     │  │
│  └──────────────────────────────────┘    │   └──────────────────────┘     │  │
│        208                                └────────────────────────────────┘  │
│                                                         206                    │
│  ┌──────────────────────────────────┐    ┌────────────────────────────────┐  │
│  │      ROTOR INTERFACE UNIT         │    │      DATA STORAGE UNIT         │  │
│  │   ┌──────────────────────┐        │    │   ┌──────────────────────┐     │  │
│  │   │    ROTATION          │~214    │    │   │ REFERENCE INFORMATION│~220 │  │
│  │   │ INSTRUCTING UNIT     │        │    │   │   STORAGE UNIT       │     │  │
│  │   └──────────────────────┘        │    │   └──────────────────────┘     │  │
│  │   ┌──────────────────────┐        │    │   ┌──────────────────────┐     │  │
│  │   │    ROTATION          │~216    │    │   │   OFFSET VALUE       │~222 │  │
│  │   │ DETECTING UNIT       │        │    │   │   STORAGE UNIT       │     │  │
│  │   └──────────────────────┘        │    │   └──────────────────────┘     │  │
│  └──────────────────────────────────┘    └────────────────────────────────┘  │
└─────────────────────────────────────────────────────────────────────────────┘
```

# FIG. 15

MOTOR OPERATED VALVE CONTROL DEVICE 〜 200    300 〜 ADJUSTMENT DEVICE

ORIGIN SEARCH COMMAND S8

S10 | START OPERATION

S12 | INSTRUCT TO MOVE STEP

STEP MOVEMENT COMMAND (STEP NUMBER)

S14 | MOVE STEP

MOVEMENT COMPLETION NOTIFICATION S16

S18 | OBTAIN FLOW RATE

S20 | STOP OPERATION

S22 | CALCULATE OFFSET VALUE

S24 | INSTRUCT TO SET OFFSET VALUE

OFFSET VALUE SETTING COMMAND (OFFSET VALUE)

S26 | STORE OFFSET VALUE

# FIG. 16

```
        ┌─────────────────────────────────┐
        │ PROCESSING PERFORMED BY MOTOR   │
        │ OPERATED VALVE CONTROL DEVICE   │
        └─────────────────────────────────┘
```

S30  IS MOVEMENT COMMAND RECEIVED?  — N

Y

S32  DETERMINE ROTATING DIRECTION AND ROTATING SPEED

S34  IS STEP TO BE ADVANCED?  — N

Y

S36  IDENTIFY STEP NUMBER

S38  CORRECT STEP NUMBER

S40  IDENTIFY EXCITATION PATTERN

S42  TURN ON/CHANGE DRIVING CURRENTS

S44  HAS STEP REACHED DESTINATION?  — N

Y

S46  TURN OFF DRIVING CURRENTS

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018135908 A
- JP 2020204344 A
- JP 2017106686 A
- JP 2003113948 A